# EUROPEAN PATENT SPECIFICATION

(11) **EP 4 293 524 B1**
(45) Date of publication and mention of the grant of the patent: **21.01.2026**
(21) Application number: 21930704.8
(22) Date of filing: 16.03.2021
(51) Int. Cl.: G06F 13/28, G06F 13/40, G06F 13/12

(54) **INTEGRATED CHIP AND DATA TRANSFER METHOD**
INTEGRIERTER CHIP UND DATENÜBERTRAGUNGSVERFAHREN
PUCE INTÉGRÉE ET PROCÉDÉ DE TRANSFERT DE DONNÉES

(43) Date of publication of application: 20.12.2023
(73) Proprietor: Huawei Technologies Co., Ltd., Shenzhen, Guangdong 518129 (CN)
(72) Inventor: ZENG, Hongyi, Shenzhen, Guangdong 518129 (CN); XIN, Hengchao, Shenzhen, Guangdong 518129 (CN); XIA, Jing, Shenzhen, Guangdong 518129 (CN)
(74) Representative: MERH-IP Matias Erny Reichl Hoffmann Patentanwälte PartG mbB
(86) International application number: PCT/CN2021/080915
(87) International publication number: WO 2022/193108

(56) References cited:
- EP-A1- 3 343 384
- CN-A- 105 938 461
- CN-A- 106 096 038
- CN-A- 107 562 659
- US-A1- 2008 126 605
- US-B1- 7 877 524
- US-B1- 8 738 860

## Description

### TECHNICAL FIELD

This application relates to the field of chip technologies, and in particular, to an integrated chip and a data transfer method.

### BACKGROUND

In the big data era, higher computing power is required on a system-level chip such as a system on chip (system on chip, SoC). Data supply and transmission become one of main factors that restrict the development of computing power, and a direct memory access (direct memory access, DMA) technology emerges.

The DMA technology is a hardware acceleration technology for transferring data from one address space to another address space. A data transfer process does not require direct participation of a processor core. By using the DMA technology, data transfer task overheads of the processor core can be eliminated, and therefore the processor core can focus on a computing task. In addition, high-efficiency and high-bandwidth data transfer can be ensured, and computing power reduction of the processor core due to data waiting is avoided. Therefore, using the DMA technology to perform data transfer can improve the computing power of the processor core.

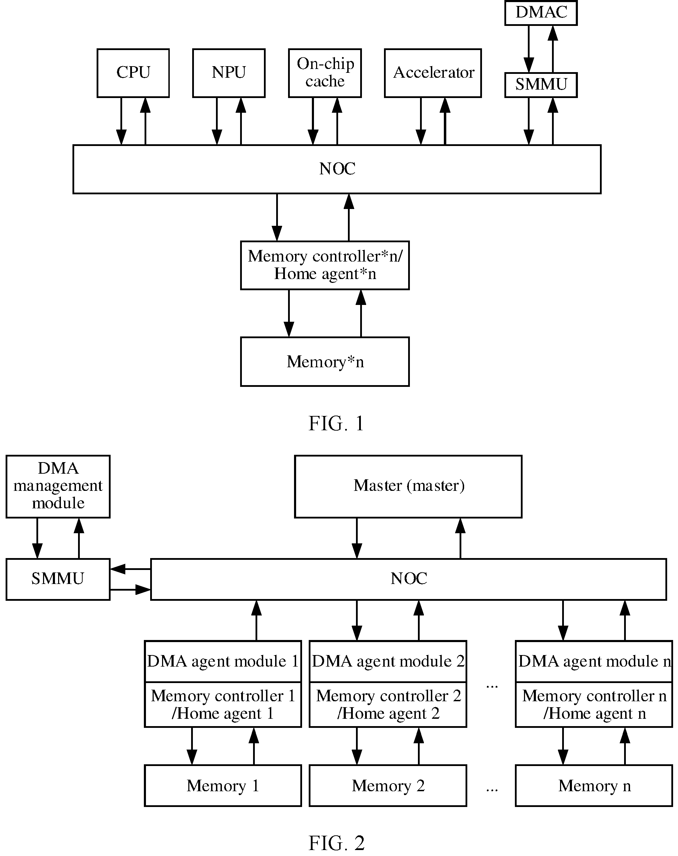

For example, FIG. 1 is a schematic diagram of a structure of an SoC chip. The SoC chip includes a central processing unit (central processing unit, CPU), a neural network processor (neural network processing unit, NPU), an on-chip cache (cache), an accelerator (accelerator), n memory controllers (memory controller), and n memories. The memory may be an off-chip memory, or may be an on-chip memory. The foregoing components are interconnected through a network on chip (network on chip, NOC). The CPU is a general-purpose processor core, and the NPU is a processor core dedicated for artificial intelligence (artificial intelligence, AI). The n memory controllers are in a one-to-one correspondence with the n memories, and the memory controllers are configured to manage data reading and writing in the memories. A home agent (home agent) is responsible for managing memory coherence (memory coherence) of the SoC chip, and may be integrated into the memory controller, or may be mounted as an independent module on the NOC.

In addition, the SoC chip further includes a direct memory access controller (direct memory access controller, DMAC) and a system memory management unit (system memory management unit, SMMU). The DMAC is an on-chip hardware accelerator dedicated to data transfer processing on hardware. The SMMU may be understood as the system memory management unit, configured to provide an address translation function based on a page table.

In the SoC chip shown in FIG. 1, the data transfer process performed by using the DMA technology may be as follows: The CPU or the NPU delivers a data transfer task to the DMAC. After receiving the data transfer task, the DMAC splits the task based on a system request processing granularity (which may be, for example, 64 bytes or 256 bytes), and initiates a read request through the NOC based on an address corresponding to a split task, to read data from a source address. After the data is read back to the DMAC, the DMAC initiates a write request and writes the read-back data to a destination address through the NOC, and data transfer of a single address is completed. The forgoing process is repeated to complete data transfer of all addresses in the data transfer task in sequence, and then the CPU or the NPU is notified, in a manner such as interruption, that the data transfer task is completed.

According to the foregoing data transfer solution, because a processing capability of a single DMAC is limited, it is difficult to meet an increasing computing power requirement of a high-performance processor chip. In addition, in this solution, all read-back data is stored in the DMAC, and therefore the DMAC needs to provide a large data cache resource, resulting in large hardware resource overheads.

Document US2008/126605 A1 generally discloses a method for handling multiple data transfer requests from one application within a computer system. In response to the receipt of multiple data transfer requests from an application, a data definition (DD) chain is generated for all the data transfer requests. The DD chain is then divided into multiple DD sub-blocks. The DD sub-blocks are subsequently loaded into a set of available direct memory access (DMA) engines. Each of the available DMA engines performs data transfers on a corresponding DD sub-block until the entire DD chain has been completed.

Document US 7 877 524 B1 generally discloses a DMA engine that is suitable for higher performance SOC devices that have multiple concurrent on-chip/off-chip memory spaces. The DMA engine operates either on logical addressing method or physical addressing method and provides random and sequential mapping function from logical address to physical address while supporting frequent context switching among a large number of logical address spaces. Embodiments of the present invention utilize per direction (source-destination) queuing and an internal switch to support non-blocking concurrent transfer of data on multiple directions. A caching technique can be incorporated to reduce the overhead of address translation.

Document US 8 738 860 B1 generally discloses a computing system that comprises one or more cores. Each core comprises a processor. In some implementations, each processor is coupled to a communication network among the cores. In some implementations, a switch in each core includes switching circuitry to forward data received over data paths from other cores to the processor and to switches of other cores, and to forward data received from the processor to switches of other cores.

### SUMMARY

Embodiments of this application provide an integrated chip and a data transfer method, to meet an increasing computing power requirement of a processor chip. In particular, this application provides an integrated chip and a data transfer method, having the features of respective independent claims. The dependent claims relate to preferred embodiments.

This application provides an integrated chip. The integrated chip includes a direct memory access DMA management module and a DMA agent module. The DMA management module is configured to split a data transfer task delivered by a processor into a plurality of subtasks, and deliver the plurality of subtasks to each DMA agent module in a plurality of DMA agent modules. Each DMA agent module in the plurality of DMA agent modules is configured to execute the plurality of subtasks.

Specifically, the processor is a central processing unit CPU or a neural network processing unit NPU.

In the integrated chip, the plurality of subtasks are respectively executed in parallel by the plurality of DMA agent modules that use a distributed architecture. Compared with a solution in the conventional technologies in which a single DMAC executes a data transfer task, data transfer processing efficiency is improved, and an increasing computing power requirement of a processor chip can be better met. In addition, the plurality of subtasks are respectively executed in parallel by the plurality of DMA agent modules, and a case in which to-be-transferred data is cached in a same component after being read back does not occur. Therefore, each DMA agent module does not need to provide a large data cache resource, and hardware overheads are reduced compared with the solution in the conventional technologies.

In addition, the integrated chip may further include a system memory management unit. The system memory management unit is configured to perform address translation on the plurality of subtasks after the DMA management module splits the data transfer task into the plurality of subtasks, and deliver a plurality of address-translated subtasks to each DMA agent module.

According to the foregoing solution, addresses corresponding to the plurality of subtasks may be translated, through the system memory management unit, into addresses (for example, physical addresses) that can be identified by the DMA agent modules.

When splitting the data transfer task delivered by the processor into the plurality of subtasks, the DMA management module splits the data transfer task into the plurality of subtasks based on a page table granularity.

According to the foregoing solution, the DMA management module splits the data transfer task based on the page table granularity, so that page table query efficiency can be improved.

Each DMA agent module is further configured to split each subtask in the plurality of subtasks, and then decode a data transfer address included in each split subtask. In this case, when executing the plurality of subtasks, each DMA agent module executes the plurality of subtasks based on the data transfer address included in each subtask.

Further, when splitting each subtask in the plurality of subtasks, each DMA agent module splits each subtask in the plurality of subtasks based on a system request processing granularity.

According to the foregoing solution, the DMA management module first performs large-granularity splitting on the data transfer task, and splits the data transfer task into the plurality of subtasks; and then the DMA agent module performs small-granularity splitting on each subtask, and decomposes, level by level, an amount of data that needs to be transferred in the data transfer task, so that a parallel degree of data transfer can be improved.

In a possible design, each DMA agent module may transfer specified data that needs to be transferred by the DMA agent module in each subtask based on the data transfer address included in each subtask.

According to the foregoing solution, each DMA agent module may determine, based on a system configuration, specified data that needs to be transferred by the DMA agent module in each subtask, and transfer the specified data. In this way, the plurality of subtasks may be executed in parallel by the plurality of DMA agent modules, thereby improving data transfer efficiency.

Specifically, when the DMA agent module transfers the specified data, because a source address and a destination address of the specified data are different, a data transfer process is also different. The following uses four examples to describe a specific data transfer process.

### Example 1

In Example 1, a specific process in which each DMA agent module transfers the specified data may be: determining that the specified data needs to be transferred from a first address of a local storage space to a second address; controlling a memory controller or a home agent to initiate a read operation on the specified data at the first address, to read the specified data to the memory controller; and controlling the memory controller or the home agent to write the specified data to the second address.

Example 1 is applicable to a scenario in which the DMA agent module transfers the specified data from the first address in the local storage space to the second address.

### Example 2

In Example 2, a specific process in which each DMA agent module transfers the specified data may be: determining that the specified data needs to be transferred from a local storage space to an external storage space; controlling a memory controller or a home agent to initiate a read operation on the specified data, to read the specified data to the memory controller; and controlling the memory controller or the home agent to write the specified data to the external storage space through a network on chip NOC.

Example 2 is applicable to a scenario in which the DMA agent module transfers the specified data from the local storage space to the external storage space.

### Example 3

In Example 3, a specific process in which each DMA agent module transfers the specified data may be: determining that the specified data needs to be transferred from an external storage space to a local storage space; controlling a memory controller or a home agent to initiate a read operation on the specified data by using an NOC, to read the specified data into the memory controller; and controlling the memory controller or the home agent to write the specified data into the local storage space.

Example 3 is applicable to a scenario in which the DMA agent module transfers the specified data from the external storage space to the local storage space.

### Example 4

In Example 4, a specific process in which each DMA agent module transfers the specified data may be: determining that the specified data needs to be transferred from a third address of an external storage space to a fourth address; controlling a memory controller or a home agent to initiate a read operation on the specified data at the third address through an NOC, to read the specified data to the memory controller; and controlling the memory controller or the home agent to write the specified data to the fourth address through the NOC.

Example 4 is applicable to a scenario in which the DMA agent module transfers the specified data from the third address in the external storage space to the fourth address.

In a possible design, the DMA agent module is further configured to send a first execution complete message to the DMA management module after executing the plurality of subtasks. The first execution complete message indicates that execution of the plurality of subtasks is completed.

Specifically, the DMA agent module may send the first execution complete message to the DMA management module through a system memory management unit.

According to the foregoing solution, the DMA management module may be enabled to determine whether execution of the plurality of subtasks is completed.

Further, the DMA management module sends a second execution complete message to the processor after receiving the first execution complete message sent by each DMA agent module. The second execution complete message indicates that execution of the data transfer task is completed.

According to the foregoing solution, after receiving the first execution complete message sent by each DMA agent module, the DMA management module may determine that a procedure in which the plurality of DMA agent modules execute in parallel the plurality of subtasks is completed, and execution of all the plurality of subtasks is completed, that is, execution of the data transfer task is completed. After determining that execution of the data transfer task is completed, the DMA agent module may report this to the processor, so that the processor is enabled to learn a message indicating that execution of the data transfer task is completed.

In a possible design, the DMA management module may be connected to each DMA agent module through the NOC or a private bus.

The DMA management module is connected to each DMA agent module through the NOC, and a connection between the DMA management module and each DMA agent module may be implemented by using an existing on-chip interconnect bus. The DMA management module is connected to each DMA agent module through the private bus, so that mutual impact on communication between direct memory access and another component in the integrated chip can be avoided, and efficient non-blocking communication between the DMA management module and the DMA agent module can also be implemented.

In a possible design, the DMA agent module may be integrated into the memory controller or the home agent.

According to the foregoing solution, when the DMA agent module performs data transfer, a command processing queue and the data cache resource in the memory controller or the home agent may be reused in a data read/write process.

This application provides a data transfer method. The method includes the following steps: A DMA management module splits a data transfer task delivered by a processor into a plurality of subtasks; the DMA management module delivers the plurality of subtasks to each DMA agent module; and each DMA agent module executes the plurality of subtasks.

Before executing the plurality of subtasks, each DMA agent module further splits each subtask in the plurality of subtasks; and then decode a data transfer address corresponding to each split subtask. That each DMA agent module executes the plurality of subtasks is implemented in the following manner: Each DMA agent module executes the plurality of subtasks based on the data transfer address corresponding to each subtask.

In another aspect, this application further provides a computer-readable storage medium. The computer-readable storage medium stores instructions, and when the instructions run on a computer, the computer is enabled to perform the method according to the second aspect and any possible design of the second aspect.

In a further aspect, this application further provides a computer program product including instructions. When the computer program product runs on a computer, the computer is enabled to perform the method according to the second aspect and any possible design of the second aspect.

In addition, it should be understood that, for technical effects brought by the second aspect to the fourth aspect and any possible design manner of the second aspect to the fourth aspect, refer to technical effects brought by different design manners in the first aspect. Details are not described herein again.

### BRIEF DESCRIPTION OF DRAWINGS

FIG. 1 is a schematic diagram of a structure of a system on chip according to the conventional technologies;
FIG. 2 is a schematic diagram of a structure of a system on chip according to an embodiment of this application;
FIG. 3 is a schematic diagram of a structure of another system on chip according to an embodiment of this application;
FIG. 4 is a schematic diagram of a structure of an integrated chip according to an embodiment of this application;
FIG. 5 is a schematic diagram of a first data transfer procedure according to an embodiment of this application;
FIG. 6 is a schematic diagram of a second data transfer procedure according to an embodiment of this application;
FIG. 7 is a schematic diagram of a third data transfer procedure according to an embodiment of this application;
FIG. 8 is a schematic diagram of a fourth data transfer procedure according to an embodiment of this application; and
FIG. 9 is a schematic flowchart of a data transfer method according to an embodiment of this application.

### DESCRIPTION OF EMBODIMENTS

The following first describes an application scenario of embodiments of this application.

Embodiments of this application are applicable to an SoC chip shown in FIG. 2. As shown in FIG. 2, the SoC chip includes a master (master), an SMMU, and n DMA agent modules (n is an integer greater than 1) that are connected through an NOC, and further includes a DMA management module connected to the SMMU and n memory controllers respectively connected to the n DMA agent modules. Each memory controller is connected to one memory, and is configured to manage data read and write of the memory. The memory may be an on-chip memory or an off-chip memory. Each memory controller and a memory connected to the memory controller may be collectively referred to as a memory channel (memory channel).

The master is a device or module that can initiate bus access, and for example, may include a CPU or an NPU. The NOC is an on-chip transmission bus, and may also be referred to as an Interconnect. Common on-chip transmission buses include structures such as a crossbar (CrossBar), a ring (Ring), and a mesh (Mesh).

In addition, the SoC chip may further include a home agent (home agent). The home agent is a point of serialization (point of serialization, POS)/point of coherence (point of coherence, POC) of the SoC chip, is responsible for managing coherence (memory coherence) of the SoC chip, and may be integrated into the memory controller (this case is used as an example in FIG. 2), or may be mounted as an independent module to the NOC, but is usually close to the memory controller.

Further, the SoC chip shown in FIG. 2 may further include functional modules (not shown in FIG. 2) such as an on-chip cache (cache) and a hardware accelerator (accelerator). The on-chip cache can provide high-performance data access for the master. The hardware accelerator can be configured to execute a specific service or operation, or can be configured to transfer data.

In the SoC chip shown in FIG. 2, a function of a DMAC is implemented by the DMA management module and the n DMA agent modules that use a distributed architecture.

The DMA management module is responsible for receiving a data transfer task delivered by software, and performs large-granularity splitting on the data transfer task, that is, perform splitting based on a page table (Page) granularity (for example, 4k or 2M), and send a plurality of split subtasks to the SMMU for page table query, and then the SMMU sends the plurality of subtasks to each DMA agent module through the on-chip transmission bus.

The DMA agent module is a hardware data transfer engine and uses a distributed architecture. The n DMA agent modules can execute in parallel the data transfer task. After receiving the plurality of subtasks, the DMA agent module further splits the plurality of subtasks into system request processing granularities (which may be, for example, 32 bytes, 64 bytes, 128 bytes, 256 bytes, or 512 bytes), and simultaneously decodes a transfer address space corresponding to each subtask, to determine an address that needs to be transferred by the DMA agent module. Data transfer is performed based on the address that needs to be transferred, and an address that does not need to be transferred by the DMA agent module is discarded.

Specifically, after the DMA agent module further splits each subtask based on the system request processing granularity, each subtask is split into a minimum unit that can perform data transfer. One minimum unit corresponds to one data transfer address (which may be, for example, a physical address), that is, data transfer at a plurality of addresses needs to be correspondingly completed in each subtask. For each subtask, the DMA agent module determines an address that needs to be executed by the DMA agent module in the subtask, executes a corresponding transfer task, and discards an address that does not need to be executed by the DMA agent module. After the DMA agent module performs the foregoing operations for each subtask, it is equivalent to that the plurality of subtasks are executed. Actually, each DMA agent module performs data transfer at some addresses in the subtask, and a sum of data transferred by the n DMA agent modules corresponds to the plurality of subtasks, that is, execution of the plurality of subtasks is jointly completed by the n DMA agent modules that use the distributed architecture.

For example, the DMA management module splits the data transfer task into two subtasks M1 and M2 based on the page table granularity. The SoC chip includes four DMA agent modules A1, A2, A3, and A4. Each agent module splits, based on the system request processing granularity, the subtask M1 into M1.1, M1.2, M1.3, and M1.4, where M1.1, M1.2, M1.3, and M1.4 correspond to four addresses, and splits the subtask M2 into M2.1, M2.2, M2.3, and M2.4, where M2.1, M2.2, M2.3, and M2.4 correspond to four addresses. A1 determines, based on a transfer address space corresponding to each subtask, M1.1 and M2.3 as addresses that need to be executed by A1; A2 determines, based on the transfer address space corresponding to each subtask, M1.2 and M1.3 as addresses that need to be executed by A2; A3 determines, based on the transfer address space corresponding to each subtask, M2.1 as an address that needs to be executed by A3; and A4 determines, based on the transfer address space corresponding to each subtask, M1.4, M2.2, and M2.4 as addresses that need to be executed by A4. After each DMA agent module executes data transfer at the address that needs to be executed by the DMA agent module, execution of the plurality of subtasks is completed, that is, execution of the data transfer task is completed.

In an actual application, when determining, in the subtask, addresses at which data needs to be transferred by the DMA agent module, the DMA agent module may perform determining based on a task allocation principle preconfigured in a system.

It should be noted that, in this embodiment of this application, that each DMA agent module executes the plurality of subtasks means that each DMA agent module determines, based on the transfer address space corresponding to each subtask and the task allocation principle configured by the system, the address that needs to be executed by the DMA agent module in each subtask, that is, each DMA agent module executes only some addresses that need to be executed by the DMA agent module, and performs a discarding operation on some addresses that do not need to be executed by the DMA agent module. In some cases, data at all addresses in a subtask may all be transferred by a DMA agent module, or a DMA agent module does not transfer data at any address in a subtask. These cases also fall within the protection scope of this embodiment of this application.

In the SoC chip shown in FIG. 2, the DMA agent module may be integrated with the home agent or be close to the home agent. The DMA agent module may reuse a command processing queue and a data cache resource in the home agent. The DMA agent module only needs to send a data transfer command to the home agent, and the home agent is responsible for data reading and writing. In other words, the DMA agent module does not need to manage data, thereby reducing extra data storage resource overheads of the DMA agent module.

In the SoC chip shown in FIG. 2, alternatively, the DMA agent module may be integrated with the memory controller or be close to the memory controller. The DMA agent module may reuse a command processing queue and a data cache resource in the memory controller. The DMA agent module only needs to send a data transfer command to the memory controller, and the memory controller is responsible for data reading and writing. In other words, the DMA agent module does not need to manage data, thereby reducing extra data storage resource overheads of the DMA agent module.

Further, the DMA agent module may be placed close to a memory side, thereby shortening a transmission path of data in the system and improving data transmission efficiency.

In addition, the page table granularity and the system request processing granularity may be understood as follows.

In a data transfer task, to-be-transferred data is generally stored in a plurality of consecutive or non-consecutive addresses. In the plurality of addresses, translation relationships of some addresses (for example, a translation relationship between a physical address and a virtual address) may be stored in a page table 1, translation relationships of some addresses may be stored in a page table 2, and translation relationships of other addresses may be stored in a page table 3... Data corresponding to one page table is classified into one group, that is, the to-be-transferred data may be classified into a plurality of groups of data, and each subtask corresponds to transferring one or more groups of data therein. The data transfer task is classified into a plurality of subtasks in this manner, that is, the data transfer task is split based on the page table granularity.

As described above, the to-be-transferred data is generally stored in the plurality of consecutive or non-consecutive addresses. Therefore, when the data transfer task is executed, data at the plurality of addresses needs to be transferred one by one. Each subtask corresponds to one or more page tables, and each page table corresponds to a plurality of addresses. Therefore, after receiving the subtasks, the DMA agent module needs to further split each subtask, for example, split each subtask by using a physical address (or a virtual address) as a unit. In this splitting manner, the subtask is split based on the system request processing granularity. After the subtasks are further split, data at addresses corresponding to the split subtasks may be transferred one by one.

It is not difficult to understand from the foregoing description that in the conventional technologies shown in FIG. 1, the DMAC splits the data transfer task based on the system request processing granularity, and after the splitting, the DMAC transfers data at all addresses in the data transfer task one by one. In this embodiment of this application, the DMA management module splits the data transfer task based on the page table granularity to obtain the plurality of subtasks. After receiving the plurality of subtasks, the DMA agent module splits the subtasks based on the system request processing granularity, and splits the subtasks into minimum units in which data transfer is executable. The DMA agent module controls the memory controller or the home agent to execute the subtasks.

In this embodiment of this application, the page table granularity may also be referred to as a page granularity, a system page table granularity, or a large granularity; and the system request processing granularity may also be referred to as a bus request granularity, a bus processing granularity, a granularity that can be normally processed by the SoC chip, or a small granularity.

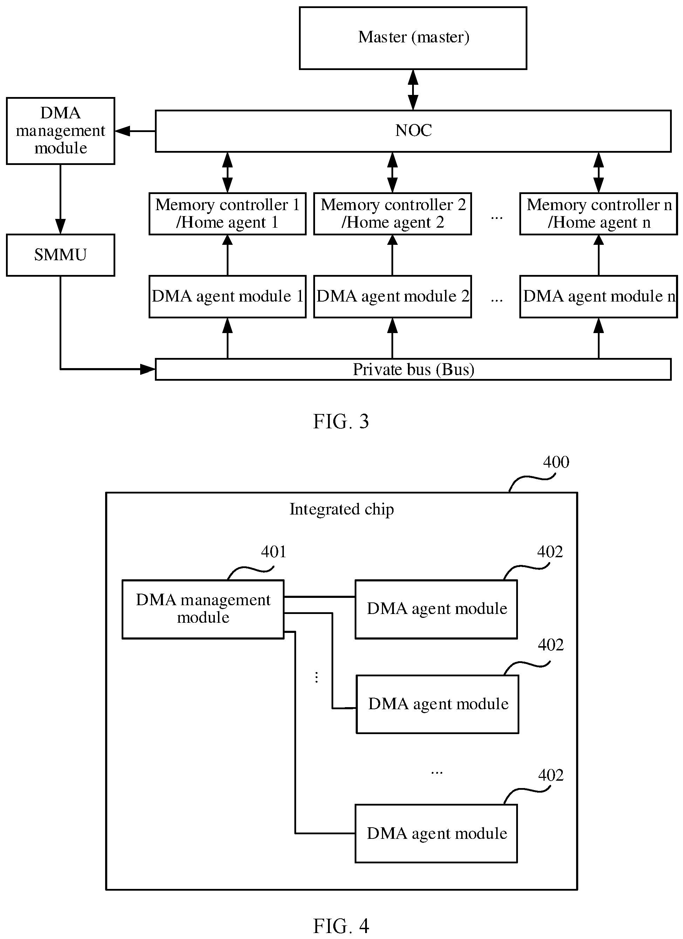

It should be noted that, in the foregoing example, the SMMU communicates with the DMA agent module through the NOC. In another implementation, the SMMU may also communicate with the DMA agent module through a private bus (Bus). As shown in FIG. 3,

in an SoC chip shown in FIG. 3, an SMMU is connected to a DMA agent module through the private bus. A connection mode of other components remains unchanged. That is to say, in this example, a DMA management module and the DMA agent module communicate with each other through the private bus. In this manner, mutual impact on communication between direct memory access and another component in the SoC chip can be avoided, and efficient non-blocking communication between the DMA management module and the DMA agent module can also be implemented.

The following further describes in detail embodiments of this application with reference to the accompanying drawings.

It should be noted that in embodiments of this application, "a plurality of" means two or more than two. In the descriptions of this application, terms such as "first" and "second" are merely used for distinguishing descriptions, and cannot be understood as an indication or implication of relative importance, or as an indication or implication of an order.

An embodiment of this application provides an integrated chip. Specifically, as shown in FIG. 4, the integrated chip 400 includes a DMA management module 401 and a plurality of DMA agent modules 402. The DMA management module 401 is configured to split a data transfer task delivered by a processor (which may be, for example, a CPU or an NPU) into a plurality of subtasks, and deliver the plurality of subtasks to each DMA agent module 402. Each DMA agent module 402 is configured to execute the plurality of subtasks.

The data transfer task may be delivered by the processor to the DMA management module 401 in a manner of software and hardware handshaking.

Specifically, the DMA management module 401 may simultaneously send the plurality of subtasks to each DMA agent module 402 in a broadcast manner. The DMA management module 401 and the DMA agent module 402 may be connected through an NOC, or may be connected through a private bus. That is to say, the DMA management module and the DMA agent module may communicate with each other through the NOC, or may communicate with each other through the private bus. For that the DMA management module 401 communicates with the DMA agent module 402 through the NOC, refer to an architecture of the SoC chip shown in FIG. 2. For that the DMA management module 401 communicates with the DMA agent module 402 through the private bus, refer to an architecture of the SoC chip shown in FIG. 3. In subsequent descriptions of this embodiment of this application, an example in which the DMA management module 401 communicates with the DMA agent module 402 through the NOC is used for description. A difference between a manner in which the DMA management module 401 communicates with the DMA agent module 402 through the private bus and a manner in which the DMA management module 401 communicates with the DMA agent module 402 through the NOC only lies in a communication medium. Details are not described in the following.

In the integrated chip 400, the DMA management module 401 may be considered as the DMA management module in the example in FIG. 2 or FIG. 3, and the DMA agent module 402 may be considered as the DMA agent module in the example in FIG. 2 or FIG. 3. In an actual application, the DMA agent module 402 may be an independent hardware module, or may be integrated into a memory controller or a home agent. The DMA agent module 402 may reuse a command processing queue and a data cache resource in the memory controller or the home agent, and send a data transfer command to the memory controller or the home agent, and the memory controller or the home agent is responsible for data reading and writing. For specific implementation of the DMA agent module 402, refer to related descriptions in the example in FIG. 2 or FIG. 3. Details are not described herein again.

It is not difficult to learn that, in this embodiment of this application, after the DMA management module 401 splits the data transfer task into the plurality of subtasks, the plurality of DMA agent modules 402 execute in parallel the plurality of subtasks. After each DMA agent module executes the plurality of subtasks, execution of the data transfer task is completed.

In the integrated chip 400, the plurality of subtasks are respectively executed in parallel by the plurality of DMA agent modules 402 that use a distributed architecture. Compared with a solution in the conventional technologies in which a single DMAC executes a data transfer task, data transfer processing efficiency is improved, and an increasing computing power requirement of a processor chip can be better met. In addition, the plurality of subtasks are respectively executed in parallel by the plurality of DMA agent modules 402, and a case in which to-be-transferred data is cached in a same component after being read back does not occur. Therefore, each DMA agent module 402 does not need to provide a large data cache resource, and hardware overheads are reduced compared with the solution in the conventional technologies.

In addition, the integrated chip 400 may further include a system memory management unit. The system memory management unit may be considered as a page table management module, and is configured to perform address translation on the plurality of subtasks after the DMA management module 401 splits the data transfer task into the plurality of subtasks, and deliver a plurality of address-translated subtasks to each DMA agent module 402.

In an actual application, addresses (including a source address and a destination address) in the data transfer task may be virtual addresses, or may be physical addresses. If the addresses in the data transfer task are virtual addresses, the system memory management unit may translate the virtual addresses into physical addresses, and may be further configured to configure a memory attribute, for example, configure a read/write permission for a corresponding address. If the addresses in the data transfer task are physical addresses, the system memory management unit may be configured to configure the memory attribute, and after the system memory management unit performs operations such as address translation and/or read/write permission configuration on the plurality of split subtasks obtained by the DMA management module, the system memory management unit forwards the plurality of split subtasks to each DMA agent module 402.

It should be noted that a function of the system memory management unit is similar to that in the conventional technologies, and details are not described in this embodiment of this application.

Specifically, when splitting the data transfer task delivered by the processor into the plurality of subtasks, the DMA management module 401 performs splitting based on a page table granularity.

The DMA management module 401 splits the data transfer task into the plurality of subtasks based on a large granularity. After receiving the plurality of subtasks, the system memory management unit may perform address query and address translation in a unit of a page table, that is, query a page table based on a page size, thereby improving query efficiency and performance of the system memory management unit.

Specifically, each DMA agent module 402 is further configured to split each subtask in the plurality of subtasks, and decode a data transfer address included in each split subtask. When executing the plurality of subtasks, each DMA agent module 402 is specifically configured to execute the plurality of subtasks based on the data transfer address included in each subtask.

Each subtask includes data transfer addresses of a plurality of pieces of data, and the data transfer addresses include the source address and the destination address. After decoding the source address and the destination address in each subtask, the DMA agent module 402 may determine addresses at which data needs to be transferred by the DMA agent module and addresses at which data does not need to be transferred by the DMA agent module.

In this case, when executing the plurality of subtasks based on the data transfer address included in each subtask, each DMA agent module 402 may transfer specified data at an address that needs to be transferred in each subtask.

In an actual application, when transferring the specified data, the DMA agent module 402 may transfer the specified data in a local storage space to a local storage space, may transfer the specified data in a local storage space to an external storage space, may transfer the specified data in an external storage space to a local storage space, or may transfer the specified data in an external storage space to an external storage space.

A system may configure a task allocation principle of the DMA agent module 402. In this case, after receiving the plurality of subtasks, each DMA management module 402 splits and decodes the plurality of subtasks, and may determine, based on the data transfer address included in each subtask and the task allocation principle configured by the system, addresses at which data needs to be transferred by the DMA management module.

In an actual application, the DMA agent module 402 may be disposed to be responsible for transferring a task in a local storage space managed by the DMA agent module 402. For example, in the example in FIG. 2 or FIG. 3, the DMA agent module determines that data at an address in the memory connected to the DMA agent module is data that needs to be transferred by the DMA agent module, that is, each DMA agent module is responsible for transferring data in the local storage space as much as possible.

In addition, when separately splitting each subtask, the DMA agent module 402 splits each subtask based on a system request processing granularity, that is, split each subtask based on a small granularity, and split each subtask into a minimum unit in which data transfer is executable by the system.

It is not difficult to see that in the integrated chip 400, the DMA management module 401 first performs large-granularity splitting on the data transfer task, and splits the data transfer task into the plurality of subtasks; and then the DMA agent module 402 performs small-granularity splitting on each subtask, and decomposes, level by level, an amount of data that needs to be transferred in the data transfer task, so that a parallel degree of data transfer can be improved.

When transferring the specified data, the DMA agent module 402 may transfer the specified data in a local storage space to a local storage space, may transfer the specified data in a local storage space to an external storage space, may transfer the specified data in an external storage space to a local storage space, or may transfer the specified data in an external storage space to an external storage space.

As described above, when transferring the specified data, the DMA agent module 402 may transfer the specified data in a local storage space to a local storage space, may transfer the specified data in a local storage space to an external storage space, may transfer the specified data in an external storage space to a local storage space, or may transfer the specified data in an external storage space to an external storage space. The following describes the four cases by using four examples respectively.

### Example 1

When the DMA agent module 402 transfers the specified data that is in each subtask and that needs to be transferred by the DMA agent module, the following manner may be used for implementation: determining that the specified data needs to be transferred from a first address of a local storage space to a second address; controlling a memory controller or a home agent to initiate a read operation on the specified data at the first address, to read the specified data to the memory controller; and controlling the memory controller or the home agent to write the specified data to the second address.

It is not difficult to see that, in Example 1, the DMA agent module 402 needs to transfer the specified data from the first address in the local storage space to the second address.

It should be understood that, in this embodiment of this application, the local storage space is a storage space corresponding to a memory connected to or near the DMA agent module 402. A storage space other than the storage space corresponding to the memory connected to or near the DMA agent module 402 may be considered as an external storage space.

For example, the integrated chip 400 includes four memory channels, a memory channel 1 includes a memory controller 1 and a memory 1, a memory channel 2 includes a memory controller 2 and a memory 2, a memory channel 3 includes a memory controller 3 and a memory 3, and a memory channel 4 includes a memory controller 4 and a memory 4. A DMA agent module 1 is integrated in the memory controller 1, a DMA agent module 2 is integrated in the memory controller 2, a DMA agent module 3 is integrated in the memory controller 3, and a DMA agent module 4 is integrated in the memory controller 4. In this case, for the DMA agent module 1, a storage space corresponding to the memory 1 may be considered as the local storage space, a storage space corresponding to the memory 2, the memory 3, and the memory 4 may be considered as the external storage space, and a storage space corresponding to an on-chip cache and a memory externally connected to the integrated chip 400 may also be considered as the external storage space.

In Example 1, because the DMA agent module 402 performs data transfer on the specified data in the local storage space, neither data reading nor data writing needs to be performed through an on-chip transmission bus, and the DMA agent module 402 controls the memory controller or the home agent to perform data reading and writing.

### Example 2

When the DMA agent module 402 transfers the specified data that is in each subtask and that needs to be transferred by the DMA agent module, the following manner may be used for implementation: determining that the specified data in a local storage space needs to be transferred to an external storage space; controlling a memory controller or a home agent to initiate a read operation on the specified data, to read the specified data to the memory controller; and controlling the memory controller or the home agent to write the specified data to the external storage space through a network on chip NOC.

It is not difficult to see that, in Example 2, the DMA agent module 402 needs to transfer the specified data from the local storage space to the external storage space.

In Example 2, because the DMA agent module 402 transfers the specified data in the local storage space to the external storage space, an on-chip transmission bus is not required in a data reading process, and the on-chip transmission bus is required in a data writing process.

### Example 3

When the DMA agent module 402 transfers the specified data that is in each subtask and that needs to be transferred by the DMA agent module, the following manner may be used for implementation: determining that the specified data in an external storage space needs to be transferred to a local storage space; controlling a memory controller or a home agent to initiate a read operation on the specified data through an NOC, to read the specified data to the memory controller; and controlling the memory controller or the home agent to write the specified data to the local storage space.

It is not difficult to see that, in Example 3, the DMA agent module 402 needs to transfer the specified data from the external storage space to the local storage space.

In Example 3, because the DMA agent module 402 transfers the specified data in the external storage space to the local storage space, an on-chip transmission bus is required in a data reading process, and the on-chip transmission bus is not required in a data writing process.

### Example 4

When the DMA agent module 402 transfers the specified data that is in each subtask and that needs to be transferred by the DMA agent module, the following manner may be used for implementation: determining that the specified data needs to be transferred from a third address of an external storage space to a fourth address; controlling a memory controller or a home agent to initiate a read operation on the specified data at the third address through an NOC, to read the specified data to the memory controller; and controlling the memory controller or the home agent to write the specified data to the fourth address through the NOC.

It is not difficult to see that, in Example 4, the DMA agent module 402 needs to transfer the specified data from the third address in the external storage space to the fourth address.

In Example 4, because the DMA agent module 402 performs data transfer on the specified data between external storage spaces, an on-chip transmission bus is required in both a data reading process and a data writing process.

In addition, in this embodiment of this application, after executing the plurality of subtasks, the DMA agent module 402 may send a first execution complete message to the DMA management module 401, where the first execution complete message indicates that execution of the plurality of subtasks is completed. Specifically, the DMA management module 402 may send the first execution complete message to the DMA management module 401 through the system memory management unit.

That the DMA management module 401 receives the first execution complete message sent by each DMA agent module 402 indicates that the plurality of subtasks split by the DMA management module 401 are all completed. In this case, the DMA management module 401 may send a second execution complete message to the processor, to indicate that execution of the data transfer task is completed.

In conclusion, in this embodiment of this application, the DMA management module 401 performs large-granularity splitting on the data transfer task into the plurality of subtasks, and the plurality of subtasks are respectively executed in parallel by the plurality of DMA agent modules 402 that use a distributed architecture. Compared with a solution in the conventional technologies in which a single DMAC executes a data transfer task, data transfer processing efficiency is improved, and an increasing computing power requirement of a processor chip can be better met. In addition, the plurality of subtasks are respectively executed in parallel by the plurality of DMA agent modules 402, and a case in which to-be-transferred data is cached in a same component after being read back does not occur. Therefore, each DMA agent module 402 does not need to provide a large data cache space, and hardware overheads are reduced compared with the solution in the conventional technologies.

The following describes, in four specific implementations, interaction between internal components of the integrated chip 400 when the data transfer task is performed in this embodiment of this application.

### Implementation 1

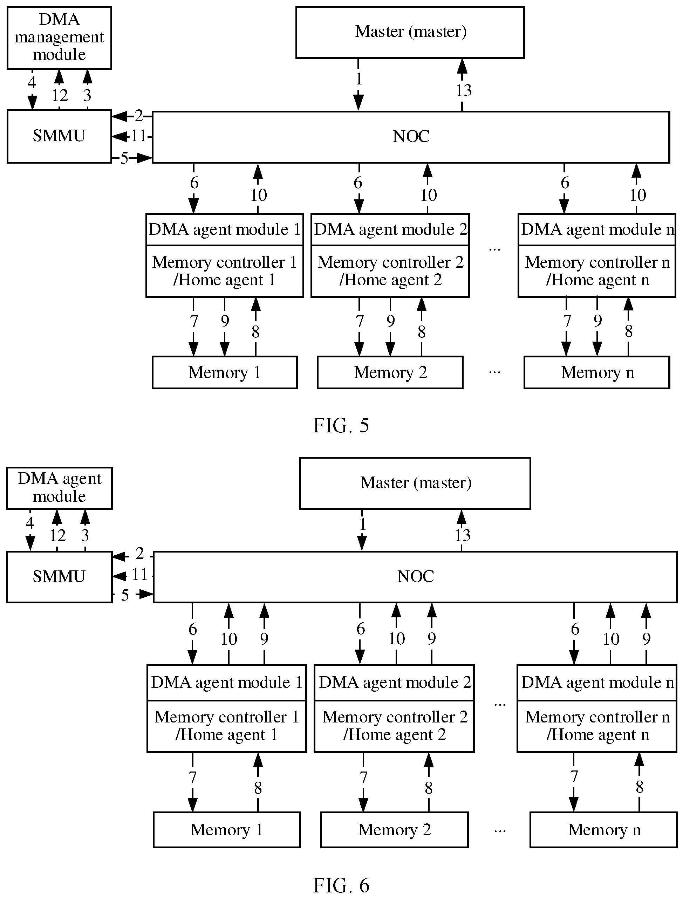

In Implementation 1, the data transfer task is a task of transferring data from the local storage space to the local storage space. A data transfer process may be shown in FIG. 5.
1. Software delivers a data transfer task through a master such as a CPU core (CPU Core).
2. The data transfer task is transmitted to an SMMU through an on-chip transmission bus (NOC/Interconnect).
3. The SMMU sends the task to a DMA manager, and the DMA manager may be considered as the foregoing DMA management module.
4. After receiving the data transfer task, the DMA manager obtains a page table granularity through the SMMU, divides the data transfer task into a plurality of subtasks based on the page table granularity, and sends the subtasks to the SMMU for address translation and translation.
5. The SMMU sends the translated subtasks to the on-chip transmission bus for transmission.
6. The on-chip transmission bus broadcasts the subtasks to each DMA agent, and the DMA agent may be considered as the foregoing DMA agent module.
7. Each DMA agent splits the subtasks based on a system request processing granularity, decodes the subtasks, determines an address that needs to be transferred in the DMA agent, discards a subtask in which the DMA agent does not need to execute transfer, determines that the transfer task is transferring data from a local memory space (namely, the local storage space) to a local memory space, and initiates a read operation on a local Memory by using a home agent or memory controller.
8. Data read from the local Memory is returned to the home agent or memory controller.
9. The DMA agent initiates a write operation by using the home agent or memory controller and writes the read-back data to the local memory space.
10. After all data that needs to be transferred by the DMA agent in the subtask is transferred, the DMA agent sends completion information to the on-chip transmission bus.
11. The completion information sent by the DMA agent is transmitted to the SMMU through the on-chip transmission bus.
12. The completion information sent by the DMA agent is transmitted to the DMA manager through the SMMU.
13. The DMA manager receives the completion information sent by each DMA agent and notifies the master or software that the data transfer task is completed.

### Implementation 2

In Implementation 2, the data transfer task is a task of transferring data from the local storage space to the external storage space. A data transfer process may be shown in FIG. 6.
1. Software delivers a data transfer task through a master such as a CPU core (CPU Core).
2. The data transfer task is transmitted to an SMMU through an on-chip transmission bus (NOC/Interconnect).
3. The SMMU sends the task to a DMA Manager, and the DMA Manager may be considered as the foregoing DMA management module.
4. After receiving the data transfer task, the DMA Manager obtains a page table granularity through the SMMU, divides the data transfer task into a plurality of subtasks based on the page table granularity, and sends the subtasks to the SMMU for address translation and translation.
5. The SMMU sends translated subtasks to the on-chip transmission bus for transmission.
6. The on-chip transmission bus broadcasts the subtasks to each DMA agent, and the DMA agent may be considered as the foregoing DMA agent module.
7. Each DMA agent splits the subtasks based on a system request processing granularity, decodes the subtasks, determines an address that needs to be transferred in the DMA agent, discards a subtask in which the DMA agent does not need to execute transfer, determines that the transfer task is transferring data from a local memory space to an external address space (namely, the external storage space), and initiates a read operation on a local Memory by using a home agent or memory controller.
8. Data read from the local Memory is returned to the home agent or memory controller.
9. The DMA agent initiates a write operation by using the home agent or memory controller and writes the read-back data to the external address space through the on-chip transmission bus.
10. After all data that needs to be transferred by the DMA agent in the subtask is transferred, the DMA agent sends completion information to the on-chip transmission bus.
11. The completion information sent by the DMA agent is transmitted to the SMMU through the on-chip transmission bus.
12. The completion information sent by the DMA agent is transmitted to the DMA manager through the SMMU.
13. The DMA manager receives the completion information sent by each DMA agent and notifies the master or software that the data transfer task is completed.

### Implementation 3

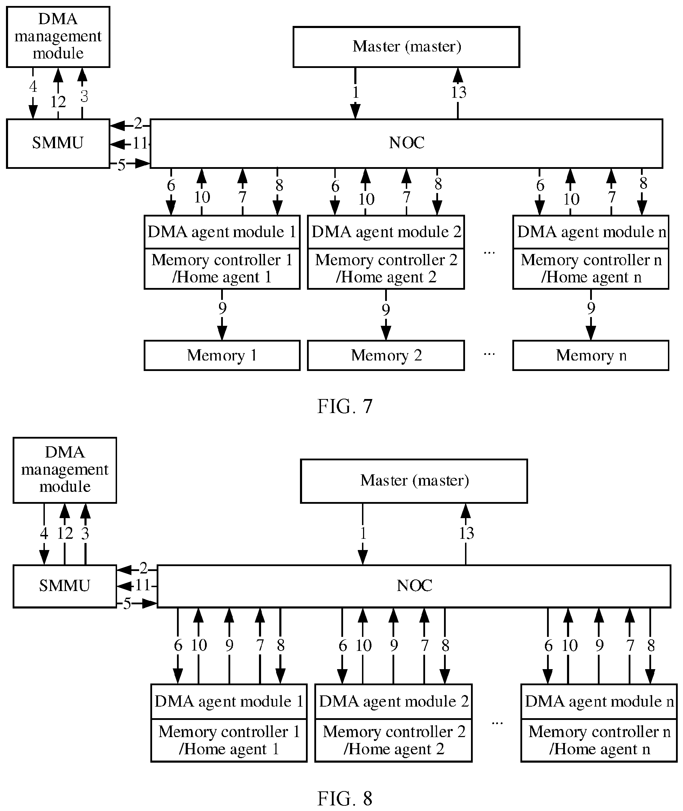

In Implementation 3, the data transfer task is a task of transferring data from the external storage space to the local storage space. A data transfer process may be shown in FIG. 7.
1. Software delivers a data transfer task through a master such as a CPU core (CPU Core).
2. The data transfer task is transmitted to an SMMU through an on-chip transmission bus (NOC/Interconnect).
3. The SMMU sends the task to a DMA Manager, and the DMA Manager may be considered as the foregoing DMA management module.
4. After receiving the data transfer task, the DMA Manager obtains a page table granularity through the SMMU, divides the data transfer task into a plurality of subtasks based on the page table granularity, and sends the subtasks to the SMMU for address translation and translation.
5. The SMMU sends translated subtasks to the on-chip transmission bus for transmission.
6. The on-chip transmission bus broadcasts the subtasks to each DMA agent, and the DMA agent may be considered as the foregoing DMA agent module.
7. Each DMA agent splits the subtasks based on a system request processing granularity, decodes the subtasks, determines an address that needs to be transferred in the DMA agent, discards a subtask in which the DMA agent does not need to execute transfer, determines that the transfer task is transferring data from an external address space to a local memory space, and initiates a read operation on the external address space through the on-chip transmission bus by using a home agent or memory controller.
8. The data read from the external address space is returned to the home agent or memory controller.
9. The DMA agent initiates a write operation by using the home agent or memory controller and writes the read-back data to the local memory space.
10. After all data that needs to be transferred by the DMA agent in the subtask is transferred, the DMA agent sends completion information to the on-chip transmission bus.
11. The completion information sent by the DMA agent is transmitted to the SMMU through the on-chip transmission bus.
12. The completion information sent by the DMA agent is transmitted to the DMA manager through the SMMU.
13. The DMA manager receives the completion information sent by each DMA agent and notifies the master or software that the data transfer task is completed.

### Implementation 4

In Implementation 4, the data transfer task is a task of transferring data from the external storage space to the external storage space. A data transfer process may be shown in FIG. 8.
1. Software delivers a data transfer task through a master such as a CPU core (CPU Core).
2. The data transfer task is transmitted to an SMMU through an on-chip transmission bus (NOC/Interconnect).
3. The SMMU sends the task to a DMA Manager, and the DMA Manager may be considered as the foregoing DMA management module.
4. After receiving the data transfer task, the DMA Manager obtains a page table granularity through the SMMU, divides the data transfer task into a plurality of subtasks based on the page table granularity, and sends the subtasks to the SMMU for address translation and translation.
5. The SMMU sends translated subtasks to the on-chip transmission bus for transmission.
6. The on-chip transmission bus broadcasts the subtasks to each DMA agent, and the DMA agent may be considered as the foregoing DMA agent module.
7. Each DMA agent splits the subtasks based on a system request processing granularity, decodes the subtasks, determines an address that needs to be transferred in the DMA agent, discards a subtask in which the DMA agent does not need to execute transfer, determines that the transfer task is transferring data from an external address space to an external address space, and initiates a read operation on the external address space through the on-chip transmission bus by using a home agent or memory controller.
8. The data read from the external address space is returned to the home agent or memory controller.
9. The DMA agent initiates a write operation through the home agent or memory controller and writes the read-back data to the external address space through the on-chip transmission bus.
10. After all data that needs to be transferred by the DMA agent in the subtask is transferred, the DMA agent sends completion information to the on-chip transmission bus.
11. The completion information sent by the DMA agent is transmitted to the SMMU through the on-chip transmission bus.
12. The completion information sent by the DMA agent is transmitted to the DMA manager through the SMMU.
13. The DMA manager receives the completion information sent by each DMA agent and notifies the master or software that the data transfer task is completed.

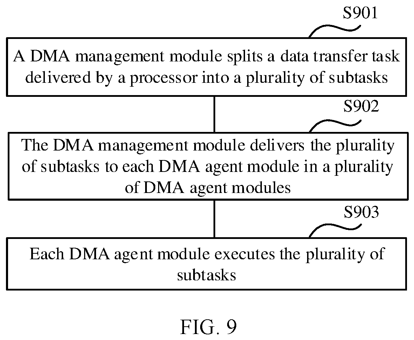

Based on a same inventive concept, an embodiment of this application further provides a data transfer method. Refer to FIG. 9. The method includes the following steps.

S901. A DMA management module splits a data transfer task delivered by a processor into a plurality of subtasks.

S902: The DMA management module delivers the plurality of subtasks to each DMA agent module in a plurality of DMA agent modules.

S903: Each DMA agent module executes the plurality of subtasks.

Optionally, before each DMA agent module executes the plurality of subtasks, each DMA agent module may further split each subtask in the plurality of subtasks, and then decode a data transfer address corresponding to each split subtask. In this case, when executing the plurality of subtasks, each DMA agent module may execute the plurality of subtasks based on the data transfer address corresponding to each subtask.

It should be noted that the data transfer method shown in FIG. 9 may be considered as a method performed by the integrated chip 400 shown in FIG. 4. For an implementation and a technical effect that are not described in detail in the data transfer method shown in FIG. 9, refer to related descriptions in the integrated chip 400 shown in FIG. 4.

## Claims

1. An integrated chip (400), comprising:
a direct memory access, DMA management module (401), configured to split a data transfer task delivered by a processor into a plurality of subtasks, and deliver the plurality of subtasks to each DMA agent module (402) in a plurality of DMA agent modules (402); and
the plurality of DMA agent modules (402), wherein each DMA agent module (402) in the plurality of DMA agent modules (402) is configured to execute the plurality of subtasks,
wherein when splitting the data transfer task delivered by the processor into the plurality of subtasks, the DMA management module (401) is specifically configured to:
split the data transfer task into the plurality of subtasks based on a page table granularity,
wherein each DMA agent module (402) is further configured to:
split each subtask in the plurality of subtasks; and
decode a data transfer address comprised in each split subtask; and
when executing the plurality of subtasks, each DMA agent module (402) is specifically configured to:
execute the plurality of subtasks based on the data transfer address comprised in each subtask; and
wherein when splitting each subtask in the plurality of subtasks, each DMA agent module (402) is specifically configured to:
split each subtask in the plurality of subtasks based on a system request processing granularity.

2. The integrated chip (400) according to claim 1, further comprising:
a system memory management unit, configured to perform address translation on the plurality of subtasks after the DMA management module (401) splits the data transfer task into the plurality of subtasks, and deliver a plurality of address-translated subtasks to each DMA agent module (402).

3. The integrated chip (400) according to claim 1 or 2, wherein when executing the plurality of subtasks based on the data transfer address comprised in each subtask, each DMA agent module (402) is specifically configured to:
transfer specified data that needs to be transferred by each DMA agent module (402) in each subtask based on the data transfer address comprised in each subtask.

4. The integrated chip (400) according to claim 3, wherein when transferring the specified data that needs to be transferred by each DMA agent module (402) in each subtask, each DMA agent module (402) is specifically configured to:
determine that the specified data needs to be transferred from a first address in a local storage space to a second address;
control a memory controller or a home agent to initiate a read operation on the specified data at the first address, to read the specified data into the memory controller; and
control the memory controller or the home agent to write the specified data into the second address.

5. The integrated chip (400) according to claim 3, wherein when transferring the specified data that needs to be transferred by each DMA agent module (402) in each subtask, each DMA agent module (402) is specifically configured to:
determine that the specified data needs to be transferred from a local storage space to an external storage space;
control a memory controller or a home agent to initiate a read operation on the specified data, to read the specified data into the memory controller; and
control the memory controller or the home agent to write the specified data into the external storage space through a network on chip, NOC.

6. The integrated chip (400) according to claim 3, wherein when transferring the specified data that needs to be transferred by each DMA agent module (402) in each subtask, each DMA agent module (402) is specifically configured to:
determine that the specified data needs to be transferred from an external storage space to a local storage space;
control a memory controller or a home agent to initiate a read operation on the specified data through an NOC, to read the specified data into the memory controller; and
control the memory controller or the home agent to write the specified data into the local storage space.

7. The integrated chip (400) according to claim 3, wherein when transferring the specified data that needs to be transferred by each DMA agent module (402) in each subtask, each DMA agent module (402) is specifically configured to:
determine that the specified data needs to be transferred from a third address in an external storage space to a fourth address;
control a memory controller or a home agent to initiate a read operation on the specified data at the third address through an NOC, to read the specified data into the memory controller; and
control the memory controller or the home agent to write the specified data into the fourth address through the NOC.

8. The integrated chip (400) according to any one of claims 1 to 7, wherein the DMA agent module (402) is further configured to:
send a first execution complete message to the DMA management module (401) after executing the plurality of subtasks, wherein the first execution complete message indicates that execution of the plurality of subtasks is completed.

9. The integrated chip (400) according to claim 8, wherein when sending the first execution complete message to the DMA management module (401), the DMA agent module (402) is specifically configured to:
send the first execution complete message to the DMA management module (401) through the system memory management unit.

10. The integrated chip (400) according to claim 8 or 9, wherein the DMA management module (401) is further configured to:
send a second execution complete message to the processor after receiving the first execution complete message sent by each DMA agent module (402), wherein the second execution complete message indicates that execution of the data transfer task is completed.

11. A data transfer method, comprising:
splitting (S901), by a direct memory access DMA management module, a data transfer task delivered by a processor into a plurality of subtasks;
delivering (S902), by the DMA management module, the plurality of subtasks to each DMA agent module in a plurality of DMA agent modules; and
executing (S903), by each DMA agent module, the plurality of subtasks,
wherein when splitting the data transfer task delivered by the processor into the plurality of subtasks, the method comprises:
splitting, by the DMA management module, the data transfer task into the plurality of subtasks based on a page table granularity,
wherein before the executing (S903), by each DMA agent module, the plurality of subtasks, the method further comprises:
splitting, by each DMA agent module, each subtask in the plurality of subtasks; and
decoding, by each DMA agent module, a data transfer address corresponding to each split task; and
the executing, by each DMA agent module, the plurality of subtasks comprises:
executing, by each DMA agent module, the plurality of subtasks based on the data transfer address corresponding to each subtask; and
wherein when splitting, by each DMA agent module, each subtask in the plurality of subtasks, the method comprises:
splitting, by each DMA agent module, each subtask in the plurality of subtasks based on a system request processing granularity.

## Patentansprüche

1. Integrierter Chip (400), umfassend:
ein Verwaltungsmodul (401) mit direktem Speicherzugriff, DMA-Verwaltungsmodul, das dazu konfiguriert ist, eine durch einen Prozessor übermittelte Datenübertragungsaufgabe in eine Vielzahl von Unteraufgaben aufzuteilen und jedem DMA-Agentenmodul (402) in einer Vielzahl von DMA-Agentenmodulen (402) die Vielzahl von Unteraufgaben zu übermitteln; und
die Vielzahl von DMA-Agentenmodulen (402), wobei jedes DMA-Agentenmodul (402) in der Vielzahl von DMA-Agentenmodulen (402) dazu konfiguriert ist, die Vielzahl von Unteraufgaben auszuführen,
wobei das DMA-Verwaltungsmodul (401) beim Aufteilen der durch den Prozessor übermittelten Datenübertragungsaufgabe in die Vielzahl von Unteraufgaben speziell dazu konfiguriert ist:
die Datenübertragungsaufgabe in die Vielzahl von Unteraufgaben basierend auf einer Granularität von Seitentabellen aufzuteilen, wobei jedes DMA-Agentenmodul (402) ferner dazu konfiguriert ist:
jede Unteraufgabe in die Vielzahl von Unteraufgaben aufzuteilen; und
eine in jeder aufgeteilten Unteraufgabe enthaltene Datenübertragungsadresse zu decodieren; und
jedes DMA-Agentenmodul (402) beim Ausführen der Vielzahl von Unteraufgaben speziell dazu konfiguriert ist:
die Vielzahl von Unteraufgaben basierend auf der in jeder Unteraufgabe enthaltenen Datenübertragungsadresse auszuführen; und
wobei jedes DMA-Agentenmodul (402) beim Aufteilen jeder Unteraufgabe in die Vielzahl von Unteraufgaben speziell dazu konfiguriert ist:
jede Unteraufgabe in der Vielzahl von Unteraufgaben basierend auf einer Granularität der Systemanforderungsverarbeitung aufzuteilen.

2. Integrierter Chip (400) nach Anspruch 1, ferner umfassend:
eine Systemspeicherverwaltungseinheit, die dazu konfiguriert ist, eine Adressübersetzung an der Vielzahl von Unteraufgaben durchzuführen, nachdem das DMA-Verwaltungsmodul (401) die Datenübertragungsaufgabe in die Vielzahl von Unteraufgaben aufgeteilt hat, und eine Vielzahl von adressübersetzten Unteraufgaben an jedes DMA-Agentenmodul (402) zu übermitteln.

3. Integrierter Chip (400) nach Anspruch 1 oder 2, wobei jedes DMA-Agentenmodul (402) beim Ausführen der Vielzahl von Unteraufgaben basierend auf der in jeder Unteraufgabe enthaltenen Datenübertragungsadresse speziell dazu konfiguriert ist:
angegebene Daten, die durch jedes DMA-Agentenmodul (402) in jeder Unteraufgabe übertragen werden müssen, basierend auf der in jeder Unteraufgabe enthaltenen Datenübertragungsadresse zu übertragen.

4. Integrierter Chip (400) nach Anspruch 3, wobei jedes DMA-Agentenmodul (402) beim Übertragen der angegebenen Daten, die durch jedes DMA-Agentenmodul (402) in jeder Unteraufgabe übertragen werden müssen, speziell dazu konfiguriert ist:
zu bestimmen, dass die angegebenen Daten von einer ersten Adresse in einem lokalen Speicherplatz an eine zweite Adresse übertragen werden müssen;
eine Speichersteuerung oder einen Home-Agenten zu steuern, um einen Lesevorgang für die angegebenen Daten an der ersten Adresse zu initiieren, um die angegebenen Daten in die Speichersteuerung einzulesen; und
die Speichersteuerung oder den Home-Agenten zu steuern, um die angegebenen Daten in die zweite Adresse zu schreiben.

5. Integrierter Chip (400) nach Anspruch 3, wobei jedes DMA-Agentenmodul (402) beim Übertragen der angegebenen Daten, die durch jedes DMA-Agentenmodul (402) in jeder Unteraufgabe übertragen werden müssen, speziell dazu konfiguriert ist:
zu bestimmen, dass die angegebenen Daten von einem lokalen Speicherplatz auf einen externen Speicherplatz übertragen werden müssen;
eine Speichersteuerung oder einen Home-Agenten zu steuern, um einen Lesevorgang für die angegebenen Daten zu initiieren, um die angegebenen Daten in die Speichersteuerung einzulesen; und die Speichersteuerung oder den Home-Agenten zu steuern, um die angegebenen Daten über ein Netzwerk auf Chip, NOC, in den externen Speicherplatz zu schreiben.

6. Integrierter Chip (400) nach Anspruch 3, wobei jedes DMA-Agentenmodul (402) beim Übertragen der angegebenen Daten, die durch jedes DMA-Agentenmodul (402) in jeder Unteraufgabe übertragen werden müssen, speziell dazu konfiguriert ist:
zu bestimmen, dass die angegebenen Daten von einem externen Speicherplatz auf einen lokalen Speicherplatz übertragen werden müssen;
eine Speichersteuerung oder einen Home-Agenten zu steuern, um einen Lesevorgang für die angegebenen Daten über ein NOC zu initiieren, um die angegebenen Daten in die Speichersteuerung einzulesen, und
die Speichersteuerung oder den Home-Agenten zu steuern, um die angegebenen Daten in den lokalen Speicherplatz zu schreiben.

7. Integrierter Chip (400) nach Anspruch 3, wobei jedes DMA-Agentenmodul (402) beim Übertragen der angegebenen Daten, die durch jedes DMA-Agentenmodul (402) in jeder Unteraufgabe übertragen werden müssen, speziell dazu konfiguriert ist:
zu bestimmen, dass die angegebenen Daten von einer dritten Adresse in einem externen Speicherplatz an eine vierte Adresse übertragen werden müssen;
eine Speichersteuerung oder einen Home-Agenten zu steuern, um einen Lesevorgang für die angegebenen Daten über ein NOC an der dritten Adresse zu initiieren, um die angegebenen Daten in die Speichersteuerung einzulesen; und
die Speichersteuerung oder den Home-Agenten zu steuern, um die angegebenen Daten über das NOC in die vierte Adresse zu schreiben.

8. Integrierter Chip (400) nach einem der Ansprüche 1 bis 7, wobei das DMA-Modul (402) ferner dazu konfiguriert ist:
eine erste Ausführungsabschlussnachricht nach dem Ausführen der Vielzahl von Unteraufgaben an das DMA-Verwaltungsmodul (401) zu senden, wobei die erste Ausführungsabschlussnachricht anzeigt, dass die Ausführung der Vielzahl von Unteraufgaben abgeschlossen ist.

9. Integrierter Chip (400) nach Anspruch 8, wobei das DMA-Agentenmodul (402) beim Senden der ersten Ausführungsabschlussnachricht an das DMA-Verwaltungsmodul (401) speziell dazu konfiguriert ist:
die erste Ausführungsabschlussnachricht über die Systemspeicherverwaltungseinheit an das DMA-Verwaltungsmodul (401) zu senden.

10. Integrierter Chip (400) nach Anspruch 8 oder 9, wobei das DMA-Verwaltungsmodul (401) ferner dazu konfiguriert ist:
eine zweite Ausführungsabschlussnachricht nach dem Empfangen der ersten Ausführungsabschlussnachricht, die durch jedes DMA-Agentenmodul (402) gesendet wird, an den Prozessor zu senden, wobei die zweite Ausführungsabschlussnachricht anzeigt, dass die Ausführung der Datenübertragungsaufgabe abgeschlossen ist.

11. Datenübertragungsverfahren, umfassend:
Aufteilen (S901) einer durch einen Prozessor übermittelten Datenübertragungsaufgabe in eine Vielzahl von Unteraufgaben durch ein Verwaltungsmodul mit direktem Speicherzugriff, DMA-Verwaltungsmodul;
Übermitteln (S902) der Vielzahl von Unteraufgaben durch das DMA-Verwaltungsmodul an jedes DMA-Agentenmodul in einer Vielzahl von DMA-Agentenmodulen; und
Ausführen (S903) der Vielzahl von Unteraufgaben durch jedes DMA-Agentenmodul,
wobei das Verfahren beim Aufteilen der durch den Prozessor übermittelten Datenübertragungsaufgabe in die Vielzahl von Unteraufgaben Folgendes umfasst:
Aufteilen der Datenübertragungsaufgabe durch das DMA-Verwaltungsmodul in die Vielzahl von Unteraufgaben basierend auf einer Granularität von Seitentabellen,
wobei das Verfahren vor dem Ausführen (S903) der Vielzahl von Unteraufgaben durch jedes DMA-Agentenmodul ferner Folgendes umfasst:
Aufteilen jeder Unteraufgabe in der Vielzahl von Unteraufgaben durch jedes DMA-Agentenmodul; und
Decodieren einer Datenübertragungsadresse entsprechend jeder aufgeteilten Aufgabe durch jedes DMA-Agentenmodul; und
das Ausführen der Vielzahl von Unteraufgaben durch jedes DMA-Agentenmodul Folgendes umfasst:
Ausführen der Vielzahl von Unteraufgaben durch jedes DMA-Agentenmodul basierend auf der Datenübertragungsadresse entsprechend jeder Unteraufgabe; und
wobei das Verfahren beim Aufteilen jeder Unteraufgabe in die Vielzahl von Unteraufgaben durch jedes DMA-Agentenmodul Folgendes umfasst:
Aufteilen jeder Unteraufgabe durch jedes DMA-Agentenmodul in die Vielzahl von Unteraufgaben basierend auf einer Granularität der Systemanforderungsverarbeitung.

## Revendications

1. Puce intégrée (400), comprenant :
un module de gestion DMA à accès direct à la mémoire (401), configuré pour diviser une tâche de transfert de données délivrée par un processeur en une pluralité de sous-tâches, et délivrer la pluralité de sous-tâches à chaque module d'agent DMA (402) dans une pluralité de modules d'agent DMA (402) ; et
la pluralité de modules d'agent DMA (402), dans laquelle chaque module d'agent DMA (402) dans la pluralité de modules d'agent DMA (402) est configuré pour exécuter la pluralité de sous-tâches,
dans laquelle lors de la division de la tâche de transfert de données délivrée par le processeur en la pluralité de sous-tâches, le module de gestion DMA (401) est spécifiquement configuré pour :
diviser la tâche de transfert de données en la pluralité de sous-tâches sur la base d'une granularité de table des pages,
dans laquelle chaque module d'agent DMA (402) est également configuré pour :
diviser chaque sous-tâche dans la pluralité de sous-tâches ; et décoder une adresse de transfert de données comprise dans chaque sous-tâche divisée ; et
lors de l'exécution de la pluralité de sous-tâches, chaque module d'agent DMA (402) est spécifiquement configuré pour :
exécuter la pluralité de sous-tâches sur la base de l'adresse de transfert de données comprise dans chaque sous-tâche ; et
dans laquelle, lors de la division de chaque sous-tâche dans la pluralité de sous-tâches, chaque module d'agent DMA (402) est spécifiquement configuré pour :
diviser chaque sous-tâche dans la pluralité de sous-tâches sur la base d'une granularité de traitement de demande système.

2. Puce intégrée (400) selon la revendication 1, comprenant également :
une unité de gestion de mémoire système, configurée pour réaliser une traduction d'adresse sur la pluralité de sous-tâches après que le module de gestion DMA (401) a divisé la tâche de transfert de données en la pluralité de sous-tâches, et fournir une pluralité de sous-tâches traduites en adresse à chaque module d'agent DMA (402).

3. Puce intégrée (400) selon la revendication 1 ou 2, dans laquelle lors de l'exécution de la pluralité de sous-tâches sur la base de l'adresse de transfert de données comprise dans chaque sous-tâche, chaque module d'agent DMA (402) est spécifiquement configuré pour :
transférer des données spécifiées qui doivent être transférées par chaque module d'agent DMA (402) dans chaque sous-tâche sur la base de l'adresse de transfert de données comprise dans chaque sous-tâche.

4. Puce intégrée (400) selon la revendication 3, dans laquelle lors du transfert des données spécifiées devant être transférées par chaque module d'agent DMA (402) dans chaque sous-tâche, chaque module d'agent DMA (402) est spécifiquement configuré pour :
déterminer que les données spécifiées doivent être transférées d'une première adresse dans un espace de stockage local vers une deuxième adresse ;
commander un dispositif de commande de mémoire ou un agent domestique pour initier une opération de lecture sur les données spécifiées à la première adresse, pour lire les données spécifiées dans le dispositif de commande de mémoire ; et
commander le dispositif de commande de mémoire ou l'agent domestique pour écrire les données spécifiées dans la deuxième adresse.

5. Puce intégrée (400) selon la revendication 3, dans laquelle lors du transfert des données spécifiées devant être transférées par chaque module d'agent DMA (402) dans chaque sous-tâche, chaque module d'agent DMA (402) est spécifiquement configuré pour :
déterminer que les données spécifiées doivent être transférées d'un espace de stockage local vers un espace de stockage externe ;
commander un dispositif de commande de mémoire ou un agent domestique pour initier une opération de lecture sur les données spécifiées, pour lire les données spécifiées dans le dispositif de commande de mémoire ; et
commander le dispositif de commande de mémoire ou l'agent domestique pour écrire les données spécifiées dans l'espace de stockage externe par le biais d'un réseau sur puce, NOC.

6. Puce intégrée (400) selon la revendication 3, dans laquelle lors du transfert des données spécifiées devant être transférées par chaque module d'agent DMA (402) dans chaque sous-tâche, chaque module d'agent DMA (402) est spécifiquement configuré pour :
déterminer que les données spécifiées doivent être transférées d'un espace de stockage externe vers un espace de stockage local ;
commander un dispositif de commande de mémoire ou un agent domestique pour initier une opération de lecture sur les données spécifiées par le biais d'un NOC, pour lire les données spécifiées dans le dispositif de commande de mémoire ; et
commander le dispositif de commande de mémoire ou l'agent domestique pour écrire les données spécifiées dans l'espace de stockage local.

7. Puce intégrée (400) selon la revendication 3, dans laquelle lors du transfert des données spécifiées devant être transférées par chaque module d'agent DMA (402) dans chaque sous-tâche, chaque module d'agent DMA (402) est spécifiquement configuré pour :
déterminer que les données spécifiées doivent être transférées d'une troisième adresse dans un espace de stockage externe vers une quatrième adresse ;
commander un dispositif de commande de mémoire ou un agent domestique pour initier une opération de lecture sur les données spécifiées à la troisième adresse par le biais d'un NOC, pour lire les données spécifiées dans le dispositif de commande de mémoire ; et
commander le dispositif de commande de mémoire ou l'agent domestique pour écrire les données spécifiées dans la quatrième adresse par le biais du NOC.

8. Puce intégrée (400) selon l'une quelconque des revendications 1 à 7, dans laquelle le module d'agent DMA (402) est également configuré pour :
envoyer un premier message d'exécution terminée au module de gestion DMA (401) après l'exécution de la pluralité de sous-tâches, dans laquelle le premier message d'exécution terminée indique que l'exécution de la pluralité de sous-tâches est terminée.

9. Puce intégrée (400) selon la revendication 8, dans laquelle lors de l'envoi du premier message d'exécution terminée au module de gestion DMA (401), le module d'agent DMA (402) est spécifiquement configuré pour :
envoyer le premier message d'exécution terminée au module de gestion DMA (401) par le biais de l'unité de gestion de mémoire système.

10. Puce intégrée (400) selon la revendication 8 ou 9, dans laquelle le module de gestion DMA (401) est également configuré pour :
envoyer un second message d'exécution terminée au processeur après la réception du premier message d'exécution terminée envoyé par chaque module d'agent DMA (402), dans laquelle le second message d'exécution terminée indique que l'exécution de la tâche de transfert de données est terminée.

11. Procédé de transfert de données, comprenant :
la division (S901), par un module de gestion DMA à accès direct à la mémoire, d'une tâche de transfert de données délivrée par un processeur en une pluralité de sous-tâches ;
la délivrance (S902), par le module de gestion DMA, de la pluralité de sous-tâches à chaque module d'agent DMA dans une pluralité de modules d'agent DMA ; et
l'exécution (S903), par chaque module d'agent DMA, de la pluralité de sous-tâches,
dans lequel, lors de la division de la tâche de transfert de données délivrée par le processeur en la pluralité de sous-tâches, le procédé comprend :
la division, par le module de gestion DMA, de la tâche de transfert de données en la pluralité de sous-tâches sur la base d'une granularité de table des pages,
dans lequel avant l'exécution (S903), par chaque module d'agent DMA, de la pluralité de sous-tâches, le procédé comprend également :
la division, par chaque module d'agent DMA, de chaque sous-tâche dans la pluralité de sous-tâches ; et
le décodage, par chaque module d'agent DMA, d'une adresse de transfert de données correspondant à chaque tâche divisée ; et l'exécution, par chaque module d'agent DMA, de la pluralité de sous-tâches comprend :
l'exécution, par chaque module d'agent DMA, de la pluralité de sous-tâches sur la base de l'adresse de transfert de données correspondant à chaque sous-tâche ; et
dans lequel lors de la division, par chaque module d'agent DMA, de chaque sous-tâche dans la pluralité de sous-tâches, le procédé comprend :
la division, par chaque module d'agent DMA, de chaque sous-tâche dans la pluralité de sous-tâches sur la base d'une granularité de traitement de demande système.
